# EUROPÄISCHE PATENTSCHRIFT

(11) **EP 1 564 111 B1**
(45) Veröffentlichungstag und Bekanntmachung des Hinweises auf die Patenterteilung: **02.11.2006**
(21) Anmeldenummer: 05001782.1
(22) Anmeldetag: 28.01.2005
(51) Int. Cl.: B62D 21/11

(54) **Lageranordnung eines Fahrschemels**
Mounting arrangement for a vehicle subframe
Dispositif de support pour châssis auxiliaire de véhicule.

(30) Priorität: 10.02.2004 DE 102004006582
(43) Veröffentlichungstag der Anmeldung: 17.08.2005
(73) Patentinhaber: Carl Freudenberg KG, 69465 Weinheim (DE)
(72) Erfinder: Jaschke, Heinz-Günter, 21077 Hamburg (DE); Von Broock, Ulrich, 21077 Hamburg (DE); Ehlbeck, Dieter, 23714 Bad Malente (DE); Kardoes, Hilrich, 21423 Winsen/Luhe (DE); Pelz, Peter, 22769 Hamburg (DE)
(74) Vertreter: Ripper, Monika Sigrid

(56) Entgegenhaltungen:
- DE-A1- 4 230 529
- DE-A1- 19 529 334
- US-B1- 6 623 020
- PATENT ABSTRACTS OF JAPAN Bd. 2003, Nr. 01, 14. Januar 2003 (2003-01-14) -& JP 2002 274195 A (NISSAN MOTOR CO LTD), 25. September 2002 (2002-09-25)

## Beschreibung

Die Erfindung betrifft eine Lageranordnung eines Fahrschemels mit Anbindung an den Fahrzeugaufbau, umfassend eine Fahrzeuglängsrichtung X, Fahrzeugquerrichtung Y und Fahrzeughochrichtung Z, wobei eine Bohrung im Fahrschemel das Lager, das eine Lagerachse und eine freie Lagerstirnfläche umfasst, aufnimmt, wobei das Lager wenigstens aus einem Elastomerkörper besteht. Eine solche Lageranordnung wird beispielsweise in der US 6 623 020 B1 offenbart.

Eine weitere gattungsgemäße Lageranordnung ist beispielsweise in der Offenlegungsschrift DE 101 46 314 A1 beschrieben, wobei der diesbezügliche Stand der Technik nun näher vorgestellt wird.

Nach diesem Stand der Technik ist die Orientierung der Lagerachse vertikal (Fahrzeughochrichtung Z). In den Fahrschemel sind dabei senkrechte Bohrungen angebracht, die das Lager aufnehmen. Die Verschraubung des Fahrschemels erfolgt mittels Durchgangsschrauben durch die Bohrung im Kern des Fahrschemellagers. Damit ist die für die Montage gewünschte senkrechte Verschraubungsrichtung gewährleistet. Der Unterschied in der Steifigkeit in Quer- und Längsrichtung wird insbesondere durch Aussparungen, so genannte Nieren, im Elastomerkörper des Lagers erreicht.

Die Lager, mit denen der Fahrschemel mit dem Aufbau verbunden sind, sollen in Fahrzeugquerrichtung Y hart im Vergleich zur Fahrzeuglängsrichtung X und zur Fahrzeughochrichtung Z sein. Die hohe Steifigkeit in Querrichtung von ca. 2000 bis 4000 N/mm folgt aus dem Wunsch nach direktem Ansprechen des Fahrzeuges, insbesondere bei Lenkbewegung (geringe Eigenlenkbewegungen der Achse). Die im Vergleich kleine Steifigkeit in Längs- und Hochrichtung von 500 bis 1000 N/mm entspricht dem Wunsch nach komfortablem Verhalten des Fahrzeuges beim Überfahren von Fahrbahnunebenheiten. Zusammenfassend gilt: Die Y-Richtung der Lagerung unterscheidet sich in ihrer Anforderung wesentlich von der X- und Z-Richtung.

Im Hintergrund dieses Anforderungsprofils, das die bisher bekannten Fahrschemellager nur unzureichend erfüllen, besteht die Aufgabe der Erfindung darin, eine in dieser Hinsicht optimale Lösung bereitzustellen, auch unter einem kostengünstigeren Gesichtspunkt.

Gelöst wird diese Aufgabe gemäß Kennzeichen des Patentspruches 1 dadurch, dass die Lagerachse und die Aufnahmebohrung in Fahrzeugquerrichtung Y verlaufen, wobei das Lager von der Radseite her in die Aufnahmebohrung einschiebbar ist, wobei die Anbindung des Lagers an den Fahrzeugaufbau über die freie Lagerstirnfläche erfolgt.

Zweckmäßige Ausgestaltungen der Erfindung sind in den Patentansprüchen 2 bis 11 genannt.

Die Erfindung wird nun unter Heranziehung des Standes der Technik (Fig. 1) anhand von Ausführungsbeispielen (Fig. 2 bis 4) unter Bezugnahme auf schematische Zeichnungen erläutert. Es zeigen:
- Fig. 1: einen Fahrschemel mit Bohrungen in Fahrzeughochrichtung Z nach dem Stand der Technik;
- Fig. 2: einen Fahrschemel mit Bohrungen in Fahrzeugquerrichtung Y;
- Fig. 3: ein Lager in Buchsenform mit einer Lagerachse in Fahrzeugquerrichtung Y;
- Fig. 4: zwei gegenüberliegende Lager mit einer gemeinsamen Lagerachse in Fahrzeugquerrichtung Y.

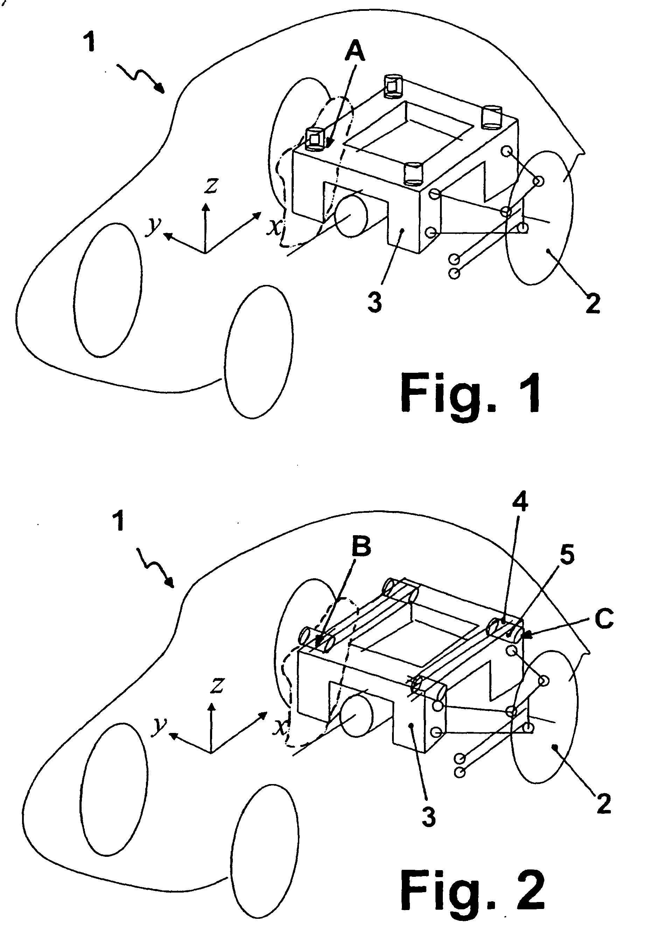

Fig. 1 zeigt ein Fahrzeug bzw. dessen Fahrzeugaufbau **1,** dessen Radseite **2** sowie Fahrschemel **3.** Die drei Raumrichtungen sind: Fahrzeuglängsrichtung X, Fahrzeugquerrichtung Y und Fahrzeughochrichtung Z. Der Fahrschemel weist dabei vier Aufnahmebohrungen auf, die alle in Fahrzeughochrichtung Z verlaufen. Diese Bohrungen nehmen das jeweilige Lager auf (Bereich A), wobei diesbezüglich auf die Beschreibungseinleitung verwiesen wird.

Fig. 2 zeigt das gleiche Fahrzeug mit dem Fahrschemel **3,** wobei hier allerdings die entsprechenden Aufnahmebohrungen **4** für das jeweilige einschiebbare Lager 5 in Fahrzeugquerrichtung Y verlaufen (liegendes Fahrschemellager im Bereich B). Die freie bzw. zugängliche äußere Lagerstirnfläche (Bereich C), die aus der Aufnahmebohrung herausragt, übernimmt dabei die Anbindung an den Fahrzeugaufbau.

Als Lager kommen folgende Typen zur Anwendung:
- konventionelle Lager, insbesondere Buchsen;
- hydraulisch dämpfende Lager, insbesondere Hydrobuchsen;
- pneumatisch dämpfende Lager;
- aktiv die Schwingung tilgende Lager.

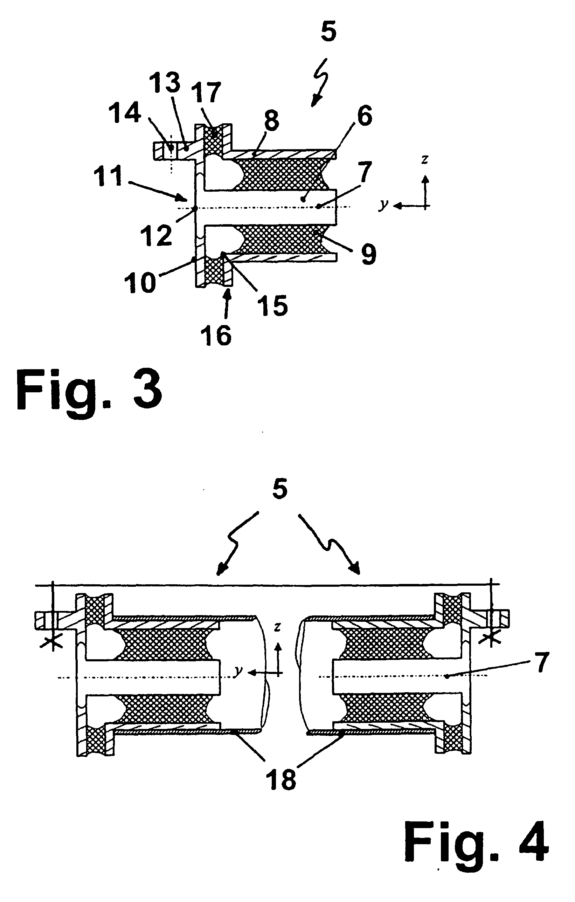

Von besonderer Bedeutung sind die Buchsen, die in Verbindung mit den Fig. 3 und 4 näher vorgestellt werden.

Nach Fig. 3 umfasst das buchsenförmige Lager **5** wenigstens folgende Bauteile:
- einen Kern **6** als Lagerachse **7** (in Fahrzeugquerrichtung Y) aus Metall oder Kunststoff;
- eine Außenhülse **8,** die ebenfalls aus Metall oder Kunststoff besteht; sowie
- einen Elastomerkörper **9,** der zwischen dem Kern **6** und der Außenhülse **8** angeordnet ist.

Der Kern **6** und die Außenhülse **8** bestehen zumeist aus Metall, insbesondere aus Stahl oder Aluminium. Auch entsprechende Kunststoffe (z.B. auf Basis von Polyphenylether; Vestoran® der Firma Hüls) kommen zum Einsatz. Der Elastomerkörper **9** ist zumeist eine vulkanisierte Kautschukmischung auf der Basis von Natur- oder eines Synthesekautschuks, beispielsweise in Form von Silikon-Kautschuk (DE 44 22 048 A1). Die Haftung des Elastomerkörpers mit dem Kern und der Außenhülse erfolgt dabei über den Weg der Vulkanisation.

Die Anbindung des Lagers **5** am Fahrzeugaufbau geschieht über die freie bzw. zugängliche äußere Kernstirnfläche **10,** die hier die Lagerstirnfläche (Fig. 2, Bereich C) übernimmt. Diese Kernstirnfläche ist dabei aus einem in Fahrzeughochrichtung Z verlaufenden Flansch **11** gebildet, der die Anbindung des Lagers an den Fahrzeugaufbau übernimmt. Der Kern **6** ist hier im Wesentlichen im Bereich des Flanschmittelpunktes **12** angeordnet. Darüber hinaus geht der Flansch **11** in einen in Fahrzeugquerrichtung Y verlaufenden Vorsprung **13** über, der mit einer Bohrung **14** für die Verschraubung versehen ist.

Die Außenhülse **8** geht ferner innerhalb seines freien Stirnbereiches **15** in einen in Fahrzeughochrichtung Z verlaufenden Flansch **16** über. Zwischen dem Flansch **11** des Kerns **6** und dem Flansch **16** der Außenhülse **8** ist ein zusätzlicher Elastomerkörper **17** angeordnet. Hinsichtlich des Elastomerwerkstoffes wird auf das verwiesen, was im Zusammenhang mit dem Elastomerkörper **9** bereits dargelegt wurde.

Nach Fig. 4 ist der Fahrschemel **3** (Fig. 2) durch jeweils zwei gegenüberliegende Lager gemäß Fig. 3 mit einer gemeinsamen Lagerachse **7** in Fahrzeugquerrichtung Y gelagert. Die Aufnahmebohrung für die beiden Lager umfasst einen rohrförmigen Körper **18** aus Metall oder Kunststoff. Hinsichtlich der diesbezüglichen Werkstofftechnologie gilt das gleiche wie bei dem Kern und der Außenhülse.

Die Bohrung **4** bzw. der rohrförmige Körper **18** kann in Fahrzeugquerrichtung Y durchgehend verlaufen, verbunden mit zwei Öffnungen. Im jeweiligen Öffnungsbereich ist dann ein Fahrschemellager eingebracht. Für insgesamt vier Lager sind dann lediglich zwei Bohrungen bzw. rohrförmige Körper erforderlich.

Die Bohrung **4** bzw. der rohrförmige Körper **18** kann in Fahrzeugquerrichtung Y auch abschnittsweise verlaufen. Für insgesamt vier Lager sind dann hier vier Bohrungen bzw. rohrförmige Körper erforderlich. Diese Konstellation ist in Fig. 2 dargestellt.

### Bezugszeichenliste

- **1**: Fahrzeug (Fahrzeugaufbau)
- **2**: Radseite
- **3**: Fahrschemel
- **4**: Aufnahmebohrung in Fahrzeugquerrichtung Y
- **5**: Lager (Fahrschemellager)
- **6**: Kern
- **7**: Lagerachse (Kernachse)
- **8**: Außenhülse
- **9**: Elastomerkörper
- **10**: freie Kernstirnfläche
- **11**: Flansch des Kerns
- **12**: Flanschmittelpunkt
- **13**: Vorsprung
- **14**: Bohrung für die Verschraubung
- **15**: freier Stirnbereich der Außenhülse
- **16**: Flansch der Hülse
- **17**: Elastomerkörper
- **18**: rohrförmiger Körper
- A: Bereich Aufnahmebohrung und Lager (Stand der Technik)
- B: Bereich Aufnahmebohrung und Lager (erfindungsgemäße Lageranordnung)
- C: Bereich der freien Lagerstirnfläche
- X: Fahrzeuglängsrichtung
- Y: Fahrzeugquerrichtung
- Z: Fahrzeughochrichtung

## Patentansprüche

1. Lageranordnung eines Fahrschemels (3) mit Anbindung an einen Fahrzeugaufbau (1), umfassend eine Fahrzeuglängsrichtung X, Fahrzeugquerrichtung Y und Fahrzeughochrichtung Z, wobei eine Aufnahmebohrung (4) im Fahrschemel das Lager (5), das eine Lagerachse (7) und eine freie Lagerstirnfläche umfasst, aufnimmt, wobei das Lager wenigstens aus einem Elastomerkörper besteht, **dadurch gekennzeichnet, dass** die Lagerachse (7) und die Aufnahmebohrung (4) in Fahrzeugquerrichtung Y verlaufen, wobei das Lager (5) von der Radseite (2) her in die Aufnahmebohrung einschiebbar ist, wobei die Anbindung des Lagers an den Fahrzeugaufbau (1) über die freie Lagerstirnfläche erfolgt.

2. Lageranordnung nach Anspruch 1, **dadurch gekennzeichnet, dass** das Lager (5) als Buchse ausgebildet ist, umfassend wenigstens:
- einen Kern (6) als Lagerachse (7) aus Metall oder Kunststoff;
- eine Außenhülse (8), die ebenfalls aus Metall oder Kunststoff besteht; sowie
- einen Elastomerkörper (9), der zwischen dem Kern (6) und der Außenhülse (8) angeordnet ist.

3. Lageranordnung nach Anspruch 2, **dadurch gekennzeichnet, dass** die Anbindung des Lagers (5) an den Fahrzeugaufbau (1) über die freie Kernstirnfläche (10) erfolgt.

4. Lageranordnung nach Anspruch 3, **dadurch gekennzeichnet, dass** die freie Kernstirnfläche (10) aus einem in Fahrzeughochrichtung Z verlaufenden Flansch (11) gebildet ist, der die Anbindung übernimmt.

5. Lageranordnung nach Anspruch 4, **dadurch gekennzeichnet, dass** der Flansch (11) so ausgebildet ist, dass der Kern (6) im Wesentlichen im Bereich des Flanschmittelpunktes (12) angeordnet ist.

6. Lageranordnung nach Anspruch 4 oder 5, **dadurch gekennzeichnet, dass** der Flansch (11) in einen in Fahrzeugquerrichtung Y verlaufenden Vorsprung (13) übergeht.

7. Lageranordnung nach Anspruch 6, **dadurch gekennzeichnet, dass** der Vorsprung (13) mit einer Bohrung (14) für die Verschraubung versehen ist.

8. Lageranordnung nach einem der Ansprüche 2 bis 7, **dadurch gekennzeichnet, dass** die Außenhülse (8) innerhalb seines freien Stirnbereiches (15) in einen in Fahrzeughochrichtung Z verlaufenden Flansch (16) übergeht.

9. Lageranordnung nach Anspruch 8 in Verbindung mit einem der Ansprüche 4 bis 7, **dadurch gekennzeichnet, dass** zwischen dem Flansch (11) des Kerns (6) und dem Flansch (16) der Außenhülse (8) ein zusätzlicher Elastomerkörper (17) angeordnet ist.

10. Lageranordnung nach einem der Ansprüche 1 bis 9, **dadurch gekennzeichnet, dass** die Aufnahmebohrung (4) für das Lager (5) einen rohrförmigen Körper (18) aus Metall oder Kunststoff umfasst.

11. Lageranordnung nach einem der Ansprüche 1 bis 10, **dadurch gekennzeichnet, dass** der Fahrschemel (3) durch jeweils zwei gegenüberliegende Lager (5) mit einer gemeinsamen Lagerachse (7) in Fahrzeugquerrichtung Y gelagert ist.

## Claims

1. Bearing arrangement for a subframe (3) with connection to a vehicle body (1), comprising a longitudinal direction X, transverse direction Y and vertical direction Z of the vehicle, a receiving bore (4) in the subframe receiving the bearing (5), which comprises a bearing axis (7) and a free bearing end face, the bearing consisting at least of an elastomer body, **characterized in that** the bearing axis (7) and the receiving bore (4) extend in the transverse direction Y of the vehicle, wherein the bearing (5) may be inserted into the receiving bore from the wheel side (2), wherein the bearing is connected to the vehicle body (1) via the free bearing end face.

2. Bearing arrangement according to Claim 1, **characterized in that** the bearing (5) takes the form of a bushing, comprising at least:
- a core (6), forming the bearing axis (7), of metal or plastics material;
- an outer sleeve (8), likewise consisting of metal or plastics material; and
- an elastomer body (9), arranged between the core (6) and the outer sleeve (8).

3. Bearing arrangement according to Claim 2, **characterized in that** the bearing (5) is connected to the vehicle body (1) via the free core end face (10).

4. Bearing arrangement according to Claim 3, **characterized in that** the free core end face (10) is formed of a flange (11) extending in the vertical direction Z of the vehicle, said flange effecting connection.

5. Bearing arrangement according to Claim 4, **characterized in that** the flange (11) is constructed such that the core (6) is arranged substantially in the area of the flange centre (12).

6. Bearing arrangement according to Claim 4 or Claim 5, **characterized in that** the flange (11) develops into a projection (13) extending in the transverse direction Y of the vehicle.

7. Bearing arrangement according to Claim 6, **characterized in that** the projection (13) is provided with a bore (14) for the screw connection.

8. Bearing arrangement according to any one of Claims 2 to 7, **characterized in that** the outer sleeve (8) develops within its free end area (15) into a flange (16) extending in the vertical direction Z of the vehicle.

9. Bearing arrangement according to Claim 8 in conjunction with any one of Claims 4 to 7, **characterized in that** an additional elastomer body (17) is arranged between the flange (11) of the core (6) and the flange (16) of the outer sleeve (8).

10. Bearing arrangement according to any one of Claims 1 to 9, **characterized in that** the receiving bore (4) for the bearing (5) comprises a tubular body (18) of metal or plastics material.

11. Bearing arrangement according to any one of Claims 1 to 10, **characterized in that** the subframe (3) is mounted by means of in each case two opposing bearings (5) having a common bearing axis (7) in the transverse direction Y of the vehicle.

## Revendications

1. Dispositif de support pour châssis auxiliaire de véhicule (3) avec liaison à une superstructure de véhicule (1), comprenant une direction longitudinale de véhicule X, une direction transversale de véhicule Y et une direction verticale de véhicule Z, dans lequel un alésage de réception (4) dans le châssis auxiliaire de véhicule contient le palier (5), qui comprend un axe de palier (7) et une face frontale libre de palier, dans lequel le palier se compose au moins d'un corps élastomère, **caractérisé en ce que** l'axe de palier (7) et l'alésage de réception (4) sont orientés dans la direction transversale de véhicule Y, dans lequel le palier (5) peut être inséré dans l'alésage de réception à partir du côté de la roue (2), dans lequel la liaison du palier avec la superstructure de véhicule (1) est réalisée par la face frontale libre du palier.

2. Dispositif de support selon la revendication 1, **caractérisé en ce que** le palier (5) est conçu comme un coussinet, comprenant au moins
- un noyau (6) servant d'axe de palier (7) en métal ou en plastique,
- une douille extérieure (8), qui se compose également de métal ou de plastique; ainsi que
- un corps élastomère (9), qui est disposé entre le noyau (6) et la douille extérieure (8).

3. Dispositif de support selon la revendication 2, **caractérisé en ce que** la liaison du palier (5) à la superstructure de véhicule (1) est réalisée par la face frontale libre du noyau (10).

4. Dispositif de support selon la revendication 3, **caractérisé en ce que** la face frontale libre du noyau (10) est formée par une bride (11) s'étendant dans la direction verticale de véhicule Z, qui assure la liaison.

5. Dispositif de support selon la revendication 4, **caractérisé en ce que** la bride (11) est conçue de telle façon que le noyau (6) soit disposé essentiellement dans la région du point central (12) de la bride.

6. Dispositif de support selon la revendication 4 ou 5, **caractérisé en ce que** la bride (11) se prolonge en une saillie (13) orientée dans la direction transversale de véhicule Y.

7. Dispositif de support selon la revendication 6, **caractérisé en ce que** la saillie (13) est pourvue d'un alésage (14) pour la fixation par vis.

8. Dispositif de support selon l'une quelconque des revendications 2 à 7, **caractérisé en ce que** la douille extérieure (8) se prolonge, à l'intérieur de sa région frontale libre (15), en une bride (16) s'étendant dans la direction verticale de véhicule Z.

9. Dispositif de support selon la revendication 8 en relation avec l'une quelconque des revendications 4 à 7, **caractérisé en ce qu'**un corps élastomère supplémentaire (17) est disposé entre la bride (11) du noyau (6) et la bride (16) de la douille extérieure (8).

10. Dispositif de support selon l'une quelconque des revendications 1 à 9, **caractérisé en ce que** l'alésage de réception (4) pour le palier (5) comprend un corps tubulaire (18) en métal ou en plastique.

11. Dispositif de support selon l'une quelconque des revendications 1 à 10, **caractérisé en ce que** le châssis auxiliaire de véhicule (3) est supporté par deux paliers opposés (5) avec un axe de palier commun (7) dans la direction transversale de véhicule Y.
